# EUROPEAN PATENT APPLICATION

(11) **EP 4 660 444 A1**
(43) Date of publication of application: **10.12.2025**
(21) Application number: 25180604.8
(22) Date of filing: 03.06.2025
(51) Int. Cl.: F02D 19/06, F02D 19/10, F02D 41/00, F02D 41/30, F02B 37/16, F02D 35/02, F02D 41/22

(54) **ENGINE SYSTEM**

(30) Priority: 07.06.2024 JP 2024093016
(71) Applicant: Yanmar Holdings Co., Ltd., Osaka-shi, Osaka (JP)
(72) Inventor: KOBAYASHI, Yuki, Osaka (JP); DOUI, Masayoshi, Osaka (JP)
(74) Representative: Sekiguchi, Kazuya

(57) **Abstract**

[Problem] To prevent an abnormality of an engine that may occur due to switching from a first fuel to a second fuel.

[Solution] The engine system 100 includes an engine 1 that is capable of switching between a first mode in which a first fuel is combusted and a second mode in which at least a second fuel out of the first fuel and the second fuel is combusted, a first fuel supplier 6 that supplies the first fuel to the engine **1,** a second fuel injection device 43 that supplies the second fuel to the engine **1,** an air-fuel ratio controller 23 that controls the air-fuel ratio, a controller 7 that controls the first fuel supplier 6, the second fuel injection device 43, and the air-fuel ratio controller 23, and an acceptor 92 that accepts an instruction for the controller 7. When the acceptor 92 accepts an instruction for transition from the first mode to the second mode, the controller 7 executes self-diagnosis of at least one of the first fuel supplier 6, the second fuel injection device 43, and the air-fuel ratio controller 23 while maintaining the operation in the first mode, and determines whether to transition to the second mode based on a result of the self-diagnosis.

## Description

### TECHNICAL FIELD

The present invention relates to an engine system.

### BACKGROUND ART

A dual fuel engine capable of using a liquid fuel, such as light oil, and a gas fuel, such as hydrogen or ammonia, is known. In general, the gas fuel has higher ignitability than the liquid fuel. Furthermore, ammonia is highly toxic. Therefore, when an abnormality occurs in the engine during operation with the gas fuel, a degree of difficulty of coping with the abnormality increases. As a technique for coping with an abnormality during operation with a gas fuel, for example, Patent Document 1 discloses that, in a hydrogen mixed combustion engine in which a hydrogen carbide fuel is used as a first fuel and a fuel partially containing hydrogen is used as a second fuel, an abnormal state in which a type of an abnormality that occurs in the engine is determined based on a combustion timing and a supply ratio of the second fuel to the first fuel is detected. Patent Document 2 discloses that, in an engine capable of switching between a gas mode and a diesel mode, the engine is switched to the diesel mode when it is determined that an abnormality has occurred in the engine.

### PRIOR ART DOCUMENT

### PATENT DOCUMENT

Patent Document 1: Japanese Unexamined Patent Application Publication No. 2022-187094
Patent Document 2: Japanese Unexamined Patent Application Publication No. 2018-9475

### SUMMARY OF INVENTION

### TECHNICAL PROBLEM

Both of the configurations disclosed in Patent Documents 1 and 2 detect an abnormality of an engine during an operation with a gas fuel. Therefore, there is a problem that an abnormality of an engine cannot be prevented in advance.

The present invention takes the above circumstances into consideration, and an object of the present invention is to prevent in advance an abnormality of an engine that may occur due to switching from a first fuel to a second fuel.

### SOLUTION TO PROBLEM

To solve the above problems, an engine system according to the present invention includes an engine that is capable of switching between a first mode in which a first fuel is combusted and a second mode in which at least a second fuel out of the first fuel and the second fuel is combusted, a first fuel supplier that supplies the first fuel to the engine, a second fuel injection device that supplies the second fuel to the engine, an air-fuel ratio controller that controls an air-fuel ratio, a controller that controls the first fuel supplier, the second fuel injection device, and the air-fuel ratio controller, and an acceptor that accepts an instruction for the controller. When the acceptor accepts an instruction to transition from the first mode to the second mode, the controller executes self-diagnosis of at least one of the first fuel supplier, the second fuel injection device, and the air-fuel ratio controller while maintaining operation in the first mode, and determines whether to allow the transition to the second mode based on a result of the self-diagnosis.

The air-fuel ratio controller may include an air supply bypass valve that guides a part of supply air compressed by a compressor to an air discharge pipe, and the controller may diagnose opening and closing operations of the air supply bypass valve in the self-diagnosis.

The first fuel supplier may include liquid fuel injection valve that injects liquid fuel for ignition, and the controller may diagnose whether the liquid fuel injection valve is capable of injecting a predetermined amount of liquid fuel in the self-diagnosis.

The second fuel injection device may be a gas fuel injection valve that injects a gas fuel, and the controller may diagnose opening and closing operations of the second fuel injection device in the self-diagnosis.

When determining that there is no closing failure of the second fuel injection device in the self-diagnosis, the controller may execute a gas fuel injection test mode in which a target opening degree of the second fuel injection device is set to a predetermined opening degree which is smaller than an opening degree obtained after transition to the second mode and the gas fuel is injected while maintaining the operation in the first mode.

The controller may execute self-diagnosis of the air-fuel ratio controller during the operation in the first mode and before receiving an instruction to transition to the second mode, and determine whether to allow the transition to the second mode based on a result of the self-diagnosis executed before receiving the instruction for transition and a result of the self-diagnosis of at least one of the first fuel supplier and the second fuel injection device.

### ADVANTAGEOUS EFFECTS OF INVENTION

According to the present invention, an abnormality of an engine that may occur due to switching from a first fuel to a second fuel can be prevented in advance.

### BRIEF DESCRIPTION OF DRAWINGS

FIG. 1 is a system diagram schematically illustrating an engine system according to an embodiment of the present invention.
FIG. 2 is a block diagram illustrating an electrical configuration of an engine system according to an embodiment of the present invention.
FIG. 3 is a flowchart of control of the engine system according to the embodiment of the present invention.
FIG. 4 is a flowchart of the control of the engine system according to the embodiment of the present invention.
FIG. 5 is a time chart of the control of the engine system according to the embodiment of the present invention.
FIG. 6 is a system diagram schematically illustrating an engine system according to a modification of the embodiment of the present invention.

### DESCRIPTION OF EMBODIMENTS

Hereinafter, an engine system 100 according to an embodiment of the present invention will be described with reference to the drawings.

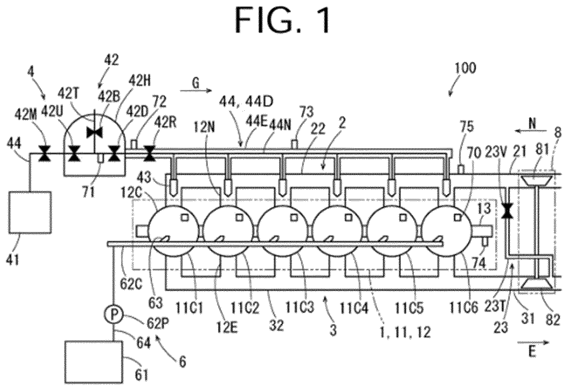

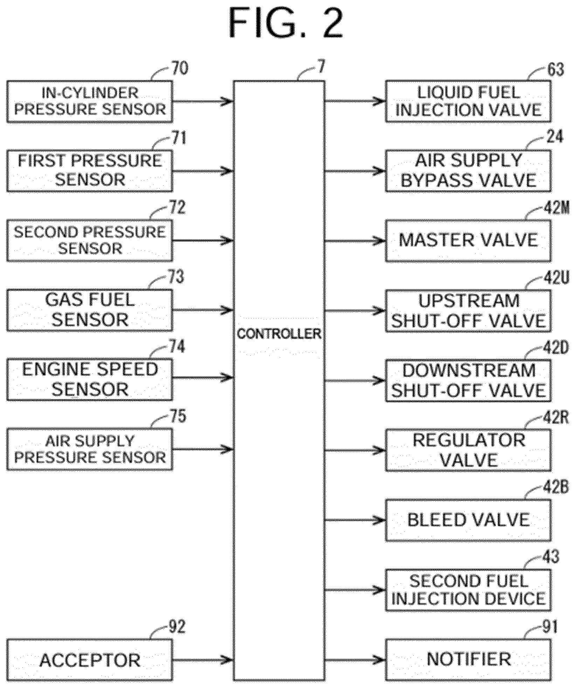

First, an entire configuration of the engine system 100 will be described. FIG. 1 is a system diagram schematically illustrating the engine system 100. FIG. 2 is a block diagram illustrating an electrical configuration of the engine system 100.

The engine system 100 includes an engine 1, an air supplier 2, an air discharger 3, a first fuel supplier 6, a second fuel supplier 4, a controller 7, and a turbocharger 8.

### Engine Body

The engine 1 includes a cylinder block 11, a cylinder head 12, and a crankshaft 13. The cylinder block 11 includes a first cylinder 11C1, a second cylinder 11C2, a third cylinder 11C3, a fourth cylinder 11C4, a fifth cylinder 11C5, and a sixth cylinder 11C6 (collectively referred to as cylinders 11C). The cylinder head 12 includes, for each cylinder 11C, a combustion chamber 12C, an air supply port 12N, and an air discharge port 12E. Although the number of the cylinders 11C is six in this embodiment, the number of the cylinders 11C may be any number in the present invention.

### Air Supplier

The air supplier 2 includes an air supply pipe 21 and an air supply manifold 22. The air supply pipe 21 is connected to the air supply ports 12N of the individual cylinders 11C via the air supply manifold 22.

### Air Discharger

The air discharger 3 includes an air discharge pipe 31 and an air discharge manifold 32. The air discharge pipe 31 is connected to air discharge ports 12E of the individual cylinders 11C via the air discharge manifold 32.

### First Fuel Supplier

The first fuel supplier 6 supplies a first fuel to the engine 1. The first fuel is, for example, a liquid fuel that is liquid at normal temperature, and is specifically light oil. The first fuel may be heavy oil, biodiesel fuel, synthetic fuel, gasoline, or the like. The first fuel is used as a main fuel in a first mode. The first fuel is used as a small amount of pilot fuel that promotes ignition in a second mode in which a second fuel is used, which will be described below.

The first fuel supplier 6 includes a liquid fuel tank 61, a pump 62P, a common-rail 62C, liquid fuel injection valve 63, and a liquid fuel supply pipe 64. The liquid fuel supply pipe 64 extending from the liquid fuel tank 61 is connected to the common-rail 62C via the pump 62P. The common-rail 62C is connected to the liquid fuel injection valve 63 of the individual cylinders 11C. The liquid fuel injection valve 63 injects the liquid fuel into the cylinders 11C.

### Second Fuel Supplier

The second fuel supplier 4 supplies the second fuel to the engine 1.

The second fuel is, for example, a gas fuel that is gas at normal temperature, and is specifically hydrogen. Note that methane, ammonia, liquefied natural gas (LNG), or the like may be used as the second fuel. The second fuel is used in the second mode.

The second fuel supplier 4 includes a gas fuel tank 41, a gas valve unit 42, a second fuel injection device 43, and a gas fuel supply pipe 44. The gas fuel supply pipe 44 extending from the gas fuel tank 41 is branched to the individual cylinders 11C via the gas valve unit 42, and is connected to the second fuel injection device 43 of the individual cylinders 11C. The second fuel injection device 43 injects a gas fuel into the air supply ports 12N of the individual cylinders 11C. The second fuel injection device 43 is, for example, a gas fuel injection valve, but may be a low-pressure gas composite valve in which an electromagnetic valve and a governor are integrated.

The gas valve unit 42 includes a master valve 42M, an upstream shut-off valve 42U, a downstream shut-off valve 42D, and a regulator valve 42R in this order from the upstream side in a gas fuel supply direction G with the gas fuel tank 41 as a most upstream portion. Between the upstream shut-off valve 42U and the downstream shut-off valve 42D, a branch pipe 42T including a bleed valve 42B is provided. At least the upstream shut-off valve 42U, the downstream shut-off valve 42D, and the bleed valve 42B are accommodated in an airtight housing 42H. An end portion of the branch pipe 42T is exposed to the outside of the housing 42H. In a section from the housing 42H of the gas fuel supply pipe 44 to the second fuel injection device 43, a double pipe portion 44D configured such that an outer pipe 44E covers an inner pipe 44N is disposed.

### Turbocharger

The turbocharger 8 is, for example, a turbocharger, and includes a compressor 81 and a turbine 82. The compressor 81 is connected to the air supply pipe 21. The turbine 82 is connected to the air discharge pipe 31. Note that the turbocharger 8 may not be provided.

### Air-Fuel Ratio Controller

The air-fuel ratio controller 23 includes an air supply bypass pipe 23T and an air supply bypass valve 23V. The air supply bypass pipe 23T allows a portion of the air supply pipe 21 downstream of the compressor 81 in an air supply direction N to communicate with a portion of the air discharge pipe 31 downstream of the turbine 82 in an air discharge direction E. The air supply bypass pipe 23T is provided with the air supply bypass valve 23V. When the air supply bypass valve 23V is opened, a portion of the supply air is guided to the air discharge pipe 31, and the air-fuel ratio decreases. When an opening degree of the air supply bypass valve 23V is controlled, the air-fuel ratio is controlled.

### Controller and Various Sensors

The controller 7 (refer to FIG. 2) is a computer, such as an engine control unit (ECU), and includes a calculator and a storage (not illustrated). The calculator is, for example, a central processing unit (CPU). The storage includes a storage medium, such as a read only memory (ROM), a random access memory (RAM), or an electrically erasable programmable read only memory (EEPROM). The calculator performs various types of processing by reading and executing control programs stored in the storage. Note that the controller 7 may be implemented by an integrated circuit that does not use software.

To the controller 7, an in-cylinder pressure sensor 70, a first pressure sensor 71, a second pressure sensor 72, a gas fuel sensor 73, an engine speed sensor 74, an air supply pressure sensor 75 are connected. The controller 7 controls the engine system 100 based on measurement values obtained by the sensors.

The in-cylinder pressure sensor 70 disposed in each of the combustion chambers 12C measures an in-cylinder pressure. The first pressure sensor 71 disposed between the upstream shut-off valve 42U and the downstream shut-off valve 42D measures a pressure of the gas fuel supply pipe 44. The second pressure sensor 72 disposed in a portion between the housing 42H and the regulator valve 44R on the double pipe portion 44D measures a pressure of the inner pipe 44N.

The gas fuel sensor 73 disposed at a position downstream of the regulator valve 42R of the double pipe portion 44D in the gas fuel supply direction G detects a gas fuel in a space between the outer pipe 44E and the inner pipe 44N.

The engine speed sensor 74 disposed in a crankcase measures a rotation speed of the crankshaft 13. The air supply pressure sensor 75 disposed at a position on the air supply pipe 21 downstream of the compressor 81 in the air supply direction N measures an air supply pressure in the air supply pipe 21.

### Notifier and Acceptor

The notifier 91 is, for example, a liquid crystal panel. The acceptor 92 is, for example, a touch panel laminated on a liquid crystal panel. The controller 7 causes the notifier 91 to display a screen indicating an operation menu, a status, or the like of the engine system 100, and controls the individual sections of the engine system 100 in accordance with operations accepted by the acceptor 92. Note that the notifier 91 may be configured to make a notification of a status of the engine system 100 or the like by voice. Furthermore, the acceptor 92 may be configured to accept an instruction for the engine system 100 through a communication line.

### Operation

Next, operation of the engine system 100 according to this embodiment will be described. The engine system 100 according to this embodiment includes the engine 1 that is capable of switching between the first mode in which the first fuel is combusted and the second mode in which at least the second fuel out of the first fuel and the second fuel is combusted, the first fuel supplier 6 that supplies the first fuel to the engine 1, the second fuel injection device 43 that supplies the second fuel to the engine 1, the air-fuel ratio controller 23 that controls the air-fuel ratio, the controller 7 that controls the first fuel supplier 6, the second fuel injection device 43, and the air-fuel ratio controller 23, and the acceptor 92 that accepts an instruction for the controller 7. When the acceptor 9 accepts an instruction for transition from the first mode to the second mode, the controller 7 executes self-diagnosis of at least one of the first fuel supplier 6, the second fuel injection device 43, and the air-fuel ratio controller 23 while maintaining the operation in the first mode, and determines whether to transition to the second mode based on a result of the self-diagnosis. Specifically, this is as follows.

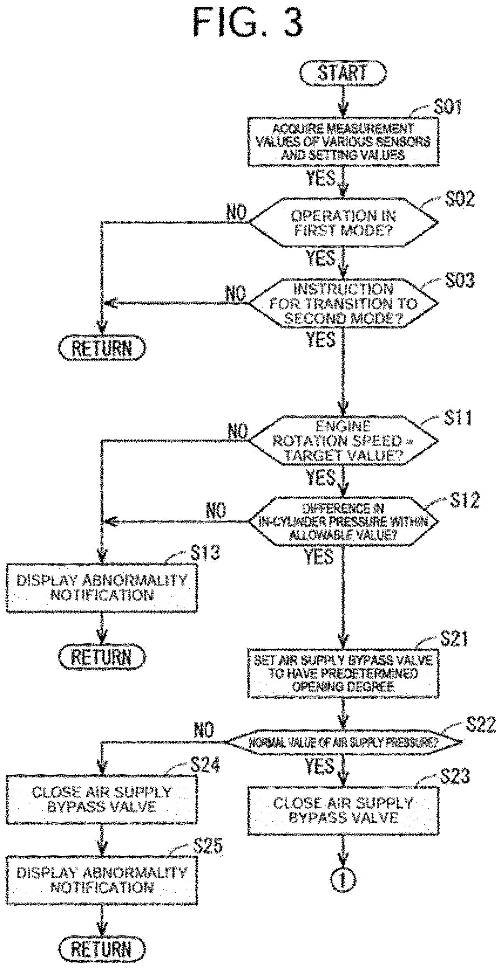

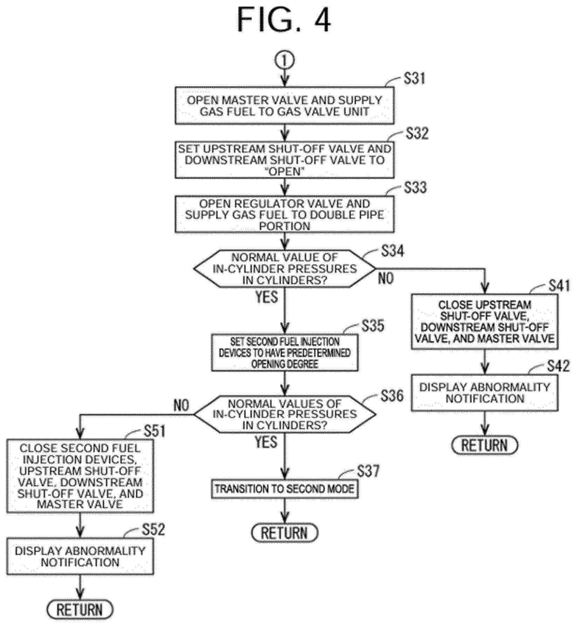

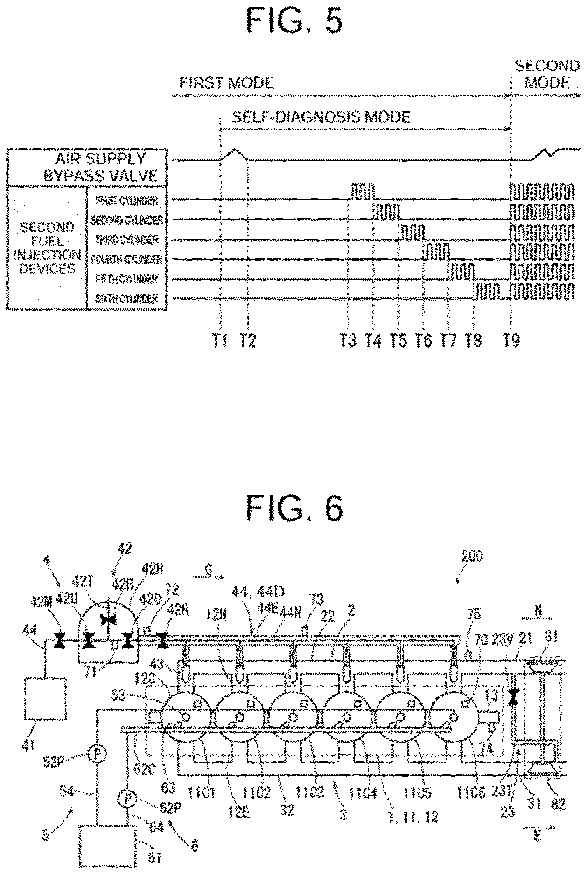

FIGS. 3 and 4 are flowcharts illustrating content of the control executed by the controller 7. FIG. 5 is a time chart illustrating a change over time in a control signal output by the controller 7. Algorithms illustrated in the flowcharts of FIGS. 3 and 4 are described as subroutines for a higher level routine. The controller 7 periodically executes these subroutines.

First (refer to FIG. 3), the controller 7 acquires measurement values of various sensors, setting values of various valves, and the like (step S01). Then, the controller 7 determines whether the engine 1 is operating in the first mode (step S02). When it is determined that the engine 1 is not operating in the first mode, that is, when it is determined that the engine 1 is operating in the second mode (step S02: NO), the controller 7 returns to the higher level routine (RETURN). On the other hand, when it is determined that the engine 1 is operating in the first mode (step S02: YES), the controller 7 determines whether the acceptor 92 has accepted an instruction for transition to the second mode (step S03). When it is determined that the instruction for transition to the second mode has not been received (step S03: NO), the controller 7 returns to the higher level routine.

On the other hand, when it is determined that the instruction for transition to the second mode has been received (step S03: YES), the controller 7 refers to a measurement value of the engine speed sensor 74 and determines whether a rotation speed of the engine 1 has reached a target value (step S11). When it is determined that the rotation speed has not reached the target value (step S11: NO), the controller 7 causes the notifier 91 to display that there is an abnormality in the rotation speed of the engine 1 (step S13), and returns to the higher level routine.

On the other hand, when it is determined that the speed has reached the target value (step S11: YES), the controller 7 refers to measurement values of the in-cylinder pressure sensors 70 of the individual cylinders 11C and determines whether a difference in in-cylinder pressure is within an allowable range (step S12). The difference in in-cylinder pressure is, for example, a difference between the maximum value and the minimum value of in-cylinder pressures of all the cylinders. When it is determined that the difference in in-cylinder pressure is out of the allowable range (step S12: NO), the controller 7 causes the notifier 91 to display that there is an abnormality in the difference in in-cylinder pressure (step S13), and returns to the higher level routine.

On the other hand, when it is determined that the difference in in-cylinder pressure is within the allowable range (step S12: YES), the controller 7 sets the air supply bypass valve 23V to have a predetermined opening degree (step S21, T1 in FIG. 5), refers to a measurement value of the air supply pressure sensor 75, and determines whether the air supply pressure is a normal value (step S22). When it is determined that an air supply pressure is not normal (step S22: NO), there is a possibility that an opening degree of the air supply bypass valve 23V is abnormal. Therefore, the controller 7 closes the air supply bypass valve 23V (step S24), causes the notifier 91 to display that there is an abnormality in the air supply bypass valve 23V (step S25), and returns to the higher level routine.

On the other hand, when it is determined that the air supply pressure is normal (step S22: YES), the controller 7 closes the air supply bypass valve 23V (step S23, T2 in FIG. 5) and proceeds to step S31 (see FIG. 4). In step S31, the controller 7 opens the master valve 42M to supply the gas fuel to the gas valve unit 42. Then, the controller 7 sets the upstream shut-off valve 42U and the downstream shut-off valve 42D to "open" (step S32), and opens the regulator valve 42R to supply the gas fuel to the double pipe portion 44D (step S33).

Then, the controller 7 determines whether the in-cylinder pressures of the individual cylinders 11C are normal values (step S34). When it is determined that there is a cylinder 11C in which the in-cylinder pressure is not normal (step S34: NO), the closing of the second fuel injection device 43 may be defective, and thus the controller 7 closes the upstream shut-off valve 42U, the downstream shut-off valve 42D, and the master valve 42M (step S41), causes the notifier 91 to display that there is an abnormality in the second fuel injection device 43 (step S42), and returns to the higher level routine.

On the other hand, when it is determined that the in-cylinder pressures of the individual cylinders 11C are normal (step S34: YES), the closing of the second fuel injection device 43 is normal, and thus the controller 7 sequentially sets the second fuel injection device 43 of the individual cylinders 11C to have a predetermined opening degree which is smaller than the opening degree after the transition to the second mode (step S35, T3 to T8 in FIG. 5), and determines whether the in-cylinder pressures of the individual cylinders 11C have normal values (step S36). When it is determined that at least one of the cylinders 11C has an in-cylinder pressure which is not normal (step S36: NO), there is a possibility that an opening degree of the corresponding second fuel injection device 43 is abnormal, and thus the controller 7 closes the second fuel injection device 43, the upstream shut-off valve 42U, the downstream shut-off valve 42D, and the master valve 42M (step S51), causes the notifier 91 to display that there is an abnormality in the second fuel injection device 43 (step S52), and returns to the higher level routine.

On the other hand, when it is determined that the in-cylinder pressures of the individual cylinders 11C are normal (step S36: YES), the opening degree of the second fuel injection device 43 is normal, and thus the controller 7 transitions to the second mode (step S37, T9 in FIG. 5).

The engine system 100 according to this embodiment described above includes the engine 1 that is capable of switching between the first mode in which the first fuel is combusted and the second mode in which at least the second fuel out of the first fuel and the second fuel is combusted, the first fuel supplier 6 that supplies the first fuel to the engine 1, the second fuel injection device 43 that supplies the second fuel to the engine 1, the air-fuel ratio controller 23 that controls the air-fuel ratio, the controller 7 that controls the first fuel supplier 6, the second fuel injection device 43, and the air-fuel ratio controller 23, and the acceptor 92 that accepts an instruction for the controller 7. When the acceptor 92 accepts an instruction for transition from the first mode to the second mode, the controller 7 executes self-diagnosis of at least one of the first fuel supplier 6, the second fuel injection device 43, and the air-fuel ratio controller 23 while maintaining the operation in the first mode, and determines whether to transition to the second mode based on a result of the self-diagnosis.

According to this embodiment, an abnormality of the engine 1 that may occur due to switching from the first mode to the second mode can be prevented in advance. Even when an abnormality is detected by the self-diagnosis, the influence of the abnormality can be limited to a small scale. When an abnormality is detected by the self-diagnosis, the operation in the first mode can be continued.

In this embodiment, the first fuel supplier 6 has both a function of supplying a main fuel in the first mode and a function of supplying a pilot fuel in the second mode. In this case, since an injection amount is significantly different between the main fuel and the pilot fuel, a supply pressure is also required to be significantly changed. However, in this embodiment, since the self-diagnosis is executed while the operation in the first mode is maintained, a supply pressure of the first fuel is not required to be significantly changed for the self-diagnosis.

**In** the engine system 100 according to this embodiment, the air-fuel ratio controller 23 includes the air supply bypass valve 23V that guides a certain amount of supply air compressed by the compressor 81 toward the air discharge pipe 31, and the controller 7 diagnoses opening and closing operations of the air supply bypass valve 23V in the self-diagnosis. According to this embodiment, an abnormality of the engine 1 caused by an abnormality of the air supply bypass valve 23V can be prevented in advance.

In the engine system 100 according to this embodiment, the first fuel supplier 6 includes the liquid fuel injection valve 63 that injects the liquid fuel for ignition, and the controller 7 diagnoses whether the liquid fuel injection valve 63 can inject a predetermined amount of fuel in the self-diagnosis. According to this embodiment, an abnormality of the engine 1 caused by an abnormality of the liquid fuel injection valve 63 can be prevented in advance.

Furthermore, in the engine system 100 according to this embodiment, the second fuel injection device 43 is a gas fuel injection valve that injects a gas fuel, and the controller 7 diagnoses the opening and closing operations of the second fuel injection device 43 in the self-diagnosis. According to this embodiment, an abnormality of the engine 1 caused by an abnormality of the second fuel injection device 43 can be prevented in advance.

Furthermore, in the engine system 100 according to this embodiment, when it is determined in the self-diagnosis that there is no closing failure of the second fuel injection device 43, the controller 7 executes a gas fuel injection test mode in which a target opening degree of the second fuel injection device 43 is set to a predetermined opening degree which is smaller than an opening degree after the transition to the second mode and the gas fuel is injected, while maintaining the operation in the first mode. According to this embodiment, the opening degree of the second fuel injection device 43 can be self-diagnosed while maintaining the operation in the first mode.

The above embodiment may be modified as follows.

Although the example in which the self-diagnosis is executed on the individual sections after the instruction for transition to the second mode is received has been described in the above embodiment, a part of the self-diagnosis may be executed before the instruction for transition to the second mode is received. For example, the controller 7 executes the self-diagnosis on the air-fuel ratio controller 23 during the operation in the first mode and before receiving the instruction for transition to the second mode, and determines whether to allow the transition to the second mode based on a result of the self-diagnosis executed before receiving the instruction for transition and a result of the self-diagnosis of at least one of the first fuel supplier 6 and the second fuel injection device 43 when receiving the instruction for transition to the second mode during the operation in the first mode. The self-diagnosis of the air-fuel ratio controller 23 can be executed without using the gas fuel. When the self-diagnosis of the air-fuel ratio controller 23 is completed before the instruction for transition to the second mode is received, a period of time required for the self-diagnosis after the instruction for transition to the second mode is received can be reduced.

FIG. 6 is a system diagram schematically illustrating an engine system 200 according to a modification. The above embodiment has described the example in which the first fuel supplier 6 supplies the first fuel as the main fuel in the first mode and supplies the first fuel as the pilot fuel in the second mode, but the present invention is also applicable to the engine system 200 in which the main fuel and the pilot fuel are supplied by different supply systems. In this modification, a first fuel supplier 6 serves to supply a pilot fuel in a second mode, and a main fuel supplier 5 supplies a main fuel in a first mode. The main fuel supplier 5 includes a pump 52P, main fuel injection valves 53, and a main fuel supply pipe 54. The main fuel injection valves 53 are provided at centers of combustion chambers 12C of cylinders 11C. The main fuel supply pipe 54 extending from a liquid fuel tank 61 is branched to the individual cylinders 11C via the pump 52P, and is connected to the main fuel injection valves 53 of the individual cylinders 11C.

Although the example in which the gas fuel is used as the second fuel has been described in the above embodiment, methanol may be used as the second fuel. In this case, a configuration of direct injection in which the second fuel is injected into the cylinders 11C is employed.

### Appendices

The above embodiment can be specified as follows.

### Appendix 1

An engine system comprising:
an engine that is capable of switching between a first mode in which a first fuel is combusted and a second mode in which at least a second fuel out of the first fuel and the second fuel is combusted;
a first fuel supplier that supplies the first fuel to the engine;
a second fuel injection device that supplies the second fuel to the engine;
an air-fuel ratio controller that controls an air-fuel ratio;
a controller that controls the first fuel supplier, the second fuel injection device, and the air-fuel ratio controller; and
an acceptor that accepts an instruction for the controller, wherein
when the acceptor accepts an instruction to transition from the first mode to the second mode, the controller executes self-diagnosis of at least one of the first fuel supplier, the second fuel injection device, and the air-fuel ratio controller while maintaining operation in the first mode, and determines whether to allow the transition to the second mode based on a result of the self-diagnosis.

### Appendix 2

The engine system according to Appendix 1, wherein
the air-fuel ratio controller includes an air supply bypass valve that guides a part of supply air compressed by a compressor to an air discharge pipe, and
the controller diagnoses opening and closing operations of the air supply bypass valve in the self-diagnosis.

### Appendix 3

The engine system according to Appendix 1 or 2, wherein
the first fuel supplier includes a liquid fuel injection valve that injects liquid fuel for ignition, and
the controller diagnoses whether the liquid fuel injection valve is capable of injecting a predetermined amount of liquid fuel in the self-diagnosis.

### Appendix 4

The engine system according to any one of Appendices 1 to 3, wherein
the second fuel injection device is a gas fuel injection valve that injects a gas fuel, and
the controller diagnoses opening and closing operations of the second fuel injection device in the self-diagnosis.

### Appendix 5

The engine system according to Appendix 4, wherein when determining that there is no closing failure of the second fuel injection device in the self-diagnosis, the controller executes a gas fuel injection test mode in which a target opening degree of the second fuel injection device is set to a predetermined opening degree which is smaller than an opening degree obtained after transition to the second mode and the gas fuel is injected while maintaining the operation in the first mode.

### Appendix 6

The engine system according to any one of Appendices 1 to 5, wherein
the controller
executes self-diagnosis of the air-fuel ratio controller during the operation in the first mode and before receiving an instruction to transition to the second mode, and
when the instruction to transition to the second mode is received during the operation in the first mode, determines whether to allow the transition to the second mode based on a result of the self-diagnosis executed before receiving the instruction for transition and a result of the self-diagnosis of at least one of the first fuel supplier and the second fuel injection device.

### REFERENCE SIGNS LIST

1 Engine
4 Second fuel supplier
6 First fuel supplier
7 Controller
23 Air-fuel ratio controller
23V Air supply bypass valve
42B Bleed valve
42D Downstream shut-off valve (shut-off valve)
42U Upstream shut-off valve (shut-off valve)
43 Second fuel injection device
44D Double pipe portion
44E Outer pipe
44N Inner pipe
63 Liquid fuel injection valve
73 Gas fuel sensor
92 Acceptor

## Claims

1. An engine system comprising:
an engine that is capable of switching between a first mode in which a first fuel is combusted and a second mode in which at least a second fuel out of the first fuel and the second fuel is combusted;
a first fuel supplier that supplies the first fuel to the engine;
a second fuel injection device that supplies the second fuel to the engine;
an air-fuel ratio controller that controls an air-fuel ratio;
a controller that controls the first fuel supplier, the second fuel injection device, and the air-fuel ratio controller; and
an acceptor that accepts an instruction for the controller, wherein
when the acceptor accepts an instruction to transition from the first mode to the second mode, the controller executes self-diagnosis of at least one of the first fuel supplier, the second fuel injection device, and the air-fuel ratio controller while maintaining operation in the first mode, and determines whether to allow the transition to the second mode based on a result of the self-diagnosis.

2. The engine system according to claim 1, wherein
the air-fuel ratio controller includes an air supply bypass valve that guides a part of supply air compressed by a compressor to an air discharge pipe, and
the controller diagnoses opening and closing operations of the air supply bypass valve in the self-diagnosis.

3. The engine system according to claim 1, wherein
the first fuel supplier includes a liquid fuel injection valve that injects liquid fuel for ignition, and
the controller diagnoses whether the liquid fuel injection valve is capable of injecting a predetermined amount of liquid fuel in the self-diagnosis.

4. The engine system according to claim 1, wherein
the second fuel injection device is a gas fuel injection valve that injects a gas fuel, and
the controller diagnoses opening and closing operations of the second fuel injection device in the self-diagnosis.

5. The engine system according to claim 4, wherein when determining that there is no closing failure of the second fuel injection device in the self-diagnosis, the controller executes a gas fuel injection test mode in which a target opening degree of the second fuel injection device is set to a predetermined opening degree which is smaller than an opening degree obtained after transition to the second mode and the gas fuel is injected while maintaining the operation in the first mode.

6. The engine system according to claim 1, wherein
the controller
executes self-diagnosis of the air-fuel ratio controller during the operation in the first mode and before receiving an instruction to transition to the second mode, and
determines whether to allow the transition to the second mode based on a result of the self-diagnosis executed before receiving the instruction for transition and a result of self-diagnosis of at least one of the first fuel supplier and the second fuel injection device.
